**Europäisches Patentamt**

**European Patent Office**

**Office européen des brevets**

(19)

(11) Veröffentlichungsnummer: **0 027 781**

**A1**

(12) **EUROPÄISCHE PATENTANMELDUNG**

(21) Anmeldenummer: **80810319.6**

(22) Anmeldetag: **21.10.80**

(51) Int. Cl.³: **B 65 G 69/28**

(30) Priorität: **23.10.79 CH 9482/79**

(43) Veröffentlichungstag der Anmeldung:
**29.04.81 Patentblatt 81/17**

(84) Benannte Vertragsstaaten:
**AT BE CH DE FR GB IT LI LU NL SE**

(71) Anmelder: **Schweizerische Aluminium AG**

**CH-8212 Neuhausen am Rheinfall(CH)**

(72) Erfinder: **Bucher, Anton**
**Ehrendingerstrasse 84**
**CH-5400 Ennetbaden(CH)**

(54) Übergangsbrücke für Fahrzeuge.

(57) Die vorliegende Erfindung bezieht sich auf eine Uebergangsbrücke mit ein einem Abstand voneinander angeordneten Anschlägen zur Sicherung gegen unbeabsichtigtes Wegrutschen von den Auflageflächen der Brücke, welche insbesondere zum Beladen und Entladen von Eisenbahn-Güterwagen auf eine Güterrampe dient.

Das Ueberbrücken von Zwischenräumen unterschiedlicher Grösse hat sich in der Praxis als schwierig erwiesen, da die bisher zur Sicherung gegen das Wegrutschen der Brücke vorgesehenen Anschläge in einigen Fällen in einem vorbestimmten Abstand fixiert sind, und weil bei anderen bekannten Uebergangsbrücken die Sicherung der Brücke gegen unbeabsichtigtes Wegrutschen mit Hilfe von Anschlägen nur in einer Richtung erfolgt. Mit Hilfe der Erfindung ist nunmehr eine Uebergangsbrücke mit einer Sicherung gegen unbeabsichtigtes Wegrutschen geschaffen worden, welche eine Stelleinrichtung aufweist, mit welcher die Grösse des Abstandes von zwei Anschlägen (14-28 und 56 zu 58; 62-82 zu 86 sowie 110 zu einem nicht dargestellten festen Anschlag) zwecks Anpassung an die in der Praxis auftretenden unterschiedlich grossen Zwischenräume selbsttätig oder von Hand einstellbar ist.

Fig. 1

EP 0 027 781 A1

Croydon Printing Company Ltd.

Uebergangsbrücke für Fahrzeuge

Die vorliegende Erfindung bezieht sich auf eine Uebergangsbrücke mit in einem Abstand angeordneten Anschlägen zur Sicherung gegen unbeabsichtigtes Wegrutschen von den Auflageflächen der Brücke, welche insbesondere zum Beladen und Entladen von Eisenbahn-Güterwagen auf eine Güterrampe dient.

Für das Ueberbrücken des Zwischenraumes zwischen einer Verladerampe und einem Fahrzeug bzw. zwischen den Ladeflächen von zwei Fahrzeugen werden über den Zwischenraum gelegte Ueber-gangsbrücken verwendet. Um ein Wegrutschen einer solchen Uebergangsbrücke von den Ladeflächen beim Ueberfahren derselben zu verhindern, ist es bekannt Anschläge anzuordnen, welche sich beispielsweise einerseits seitlich der Verladerampe und andererseits seitlich der Ladefläche eines Fahrzeuges abstützen können. - Siehe u.a. die CH-PS 355 085.

In der Praxis hat es sich jedoch gezeigt, dass solche in der Position unverrückbar fixierten Anschläge den Anforderungen nicht genügen, da der Zwischenraum zwischen einer Verladerampe und einem Fahrzeug bzw. zwischen den Ladeflächen zweier Fahr-zeuge zumeist unterschiedlich gross ist.

Bekannt ist weiterhin eine Uebergangsbrücke, mit welcher das Wegrutschen derselben nach einer Seite hin durch die Anordnung einer Sicherheitsvorrichtung in der Form von Sicherheitshaken verhindert werden kann. - Siehe in diesem Zusammenhang bei-spielsweise die DE-PS 1 289 787.

Der vorliegenden Erfindung liegt nunmehr die Aufgabe zugrunde, eine Uebergangsbrücke zu schaffen, welche - in den beiden Bewegungsrichtungen des Gütertransportes gesehen - nach jeder der beiden Seiten hin gegen das Wegrutschen bei Zwischenräumen unterschiedlicher Grösse zwischen einer Verladerampe und einem Fahrzeug bzw. zwischen den Ladeflächen von zwei Fahrzeugen gesichert ist.

Erfindungsgemäss wird die Aufgabe dadurch gelöst, dass die Uebergangsbrücke eine Stelleinrichtung für die Anschläge aufweist, welche aus einer vornehmlich parallel zur Transportrichtung an der Uebergangsbrücke angeordneten, in einer vertikalen Ebene in einem vorbestimmten Winkelbereich nach unten hin verschwenkbaren Achse besteht, an welcher mehrere in einer Reihe angeordnete Anschläge selbsttätig verschwenkbar gelagert sind.

Weitere vorteilhafte Ausführungsformen der Erfindung sind aus der nachfolgenden Beschreibung zu entnehmen.

Die Zeichnung zeigt drei Ausführungsbeispiele der Erfindung in vereinfachter Darstellungsweise, und zwar:

Fig. 1    eine Seitenansicht auf ein erstes Ausführungsbeispiel einer Uebergangsbrücke, welche zwei in einem maximalen Abstand befindliche Ladeflächen von zwei Fahrzeugen überbrückt,

Fig. 2    eine Seitenansicht der in der Fig. 1 gezeigten Uebergangsbrücke, welche hier jedoch einen kleinen Abstand zwischen den Ladeflächen von zwei Fahrzeugen überbrückt,

Fig. 3    eine Draufsicht auf die in der Fig. 2 gezeigte Uebergangsbrücke,

Fig. 4    einen Schnitt durch die Uebergangsbrücke gemäss der Linie IV-IV in der Fig. 3, aus welchem die Ausbildung und Lagerung einer der verschwenkbaren Anschläge der Uebergangsbrücke zu ersehen ist,

Fig. 5    eine Seitenansicht der in der Fig. 4 gezeigten Vorrichtung,

Fig. 6    eine Seitenansicht auf ein zweites Ausführungsbeispiel einer Uebergangsbrücke, welche zwei in einem maximalen Abstand befindliche Ladeflächen von zwei Fahrzeugen überbrückt,

Fig. 7     eine Seitenansicht der in der Fig. 6 gezeigten
           Uebergangsbrücke, welche hier jedoch einen kleinen
           Abstand zwischen den Ladeflächen von zwei Fahrzeugen überbrückt,

Fig. 8     eine Draufsicht auf die in der Fig. 2 gezeigte
           Uebergangsbrücke und

Fig. 9     einen Schnitt durch die Uebergangsbrücke gemäss
           der Linie IX-IX in der Fig. 8,

Fig. 10    eine Seitenansicht auf ein drittes Ausführungsbeispiel einer Uebergangsbrücke, insbesondere einen
           auf einem Stab hin- und herbeweglichen und an demselben feststellbaren Anschlag und

Fig. 11    einen Schnitt durch den in der Fig. 10 gezeigten
           Anschlag gemäss der Linie XI-XI in der Figur 10.


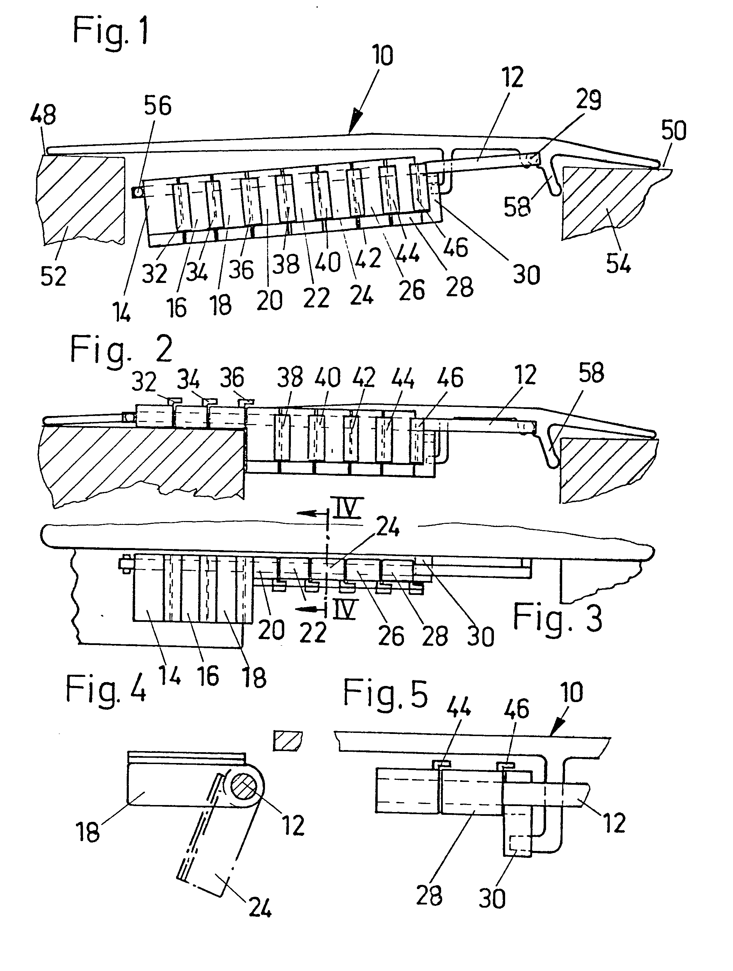

Gemäss dem in den Figuren 1-5 gezeigten ersten Ausführungsbeispiel einer Uebergangsbrücke 10 sind auf mindestens einer
Seite derselben mehrere, beispielsweise acht um eine Achse
12 verschwenkbare Anschläge 14, 16, 18, 20, 22, 24, 26, 28
vorgesehen, welche jeweils in ihrer Ausgangslage in einer
nach unten weisenden Stellung ausgerichtet sind.


Die Achse 12 ist vornehmlich parallel zur Transportrichtung
an mindestens einer Seite der Uebergangsbrücke 10 angeordnet und in einer vertikalen Ebene in einem vorbestimmten
Winkelbereich, um beispielsweise 15$^\circ$, nach unten hin verschwenkbar an der Lagerstelle 29 gelagert. Siehe Fig. 1.


Die Anschläge 14-28 sind jeweils seitlich nach aussen und
oben, jedoch nicht nach innen hin um die Achse 12 verschwenkbar. Weiterhin befindet sich - von links nach rechts gesehen
- neben dem letzten, in der vorbeschriebenen Weise verschwenkbaren Anschlag 28 ein mit der Achse 12 fest verbundener, das
heisst unverschwenkbarer Anschlag 30, auf welchem der verschwenkbare Anschlag 28 mit einem an demselben befestigten Lappen 46 aufliegt. Die weiterhin verschwenkbaren Anschläge 14-26 weisen jeweils Lappen 34, 36, 38, 40, 42, 44 und 46 auf, welche von links nach rechts gesehen den benachbarten Anschlag in der Ausgangslage teilweise überdecken bzw. auf demselben aufliegen.

Wie aus den Figuren 1 und 2 zu ersehen ist, überspannt die Uebergangsbrücke 10 zwei in verschiedenen Abständen befindliche Flächen 48 und 50 einer Rampe 52 und eines Güterwagens 54. Hierbei liegt die Achse 12 nicht mit einem oder mit mehreren Anschlägen auf der Fläche 48 auf und befindet sich daher in einer vorbestimmten, in einer um ca. 15$^{o}$ nach unten verschwenkten Lage. Das linke Ende 56 der Achse 12 dient hierbei als Anschlag gegenüber der Seitenwand der Rampe 52. An der rechten Seite weist die Uebergangsbrücke 10 an ihrer Unterseite einen weiteren, fest positionierten Anschlag 58 auf, welcher an einer Seitenwand des Güterwagens zur Anlage gelangt. Der vorbestimmte Winkelbereich für die Verschwenkung der Achse 12 kann selbstverständlich grösser oder kleiner als 15$^{o}$ gewählt werden, wenn dieses erwünscht ist.

Aus den Figuren 2 und 3 ist einmal die ausgeschwenkte Position der Anschläge 14, 16 und 18 sowie die sich nach unten erstreckende Lage der Anschläge 20, 22, 24, 26 und 28 bei einem verhältnismässig kleinem Abstand zwischen den Flächen 48 und 50 der Rampe 52 und des Güterwagens 54 zu ersehen. Um das selbsttätige Ausschwenken der Anschläge in eine gemäss den Figuren 2 und 3 ausgeschwenkte horizontale Lage zu gewährleisten, werden die Anschläge in der Ausgangsposition in einer zur Vertikalen schräg geneigten Stellung gehalten. Siehe in diesem Zusammenhang den in der Figur 4 mit einer strichpunktierten Linie in der Ausgangsstellung gezeichneten Anschlag 24 und den mit voll ausgezogener Linie gezeichneten, in die horizontale Lage ausgeschwenkten Anschlag 18.

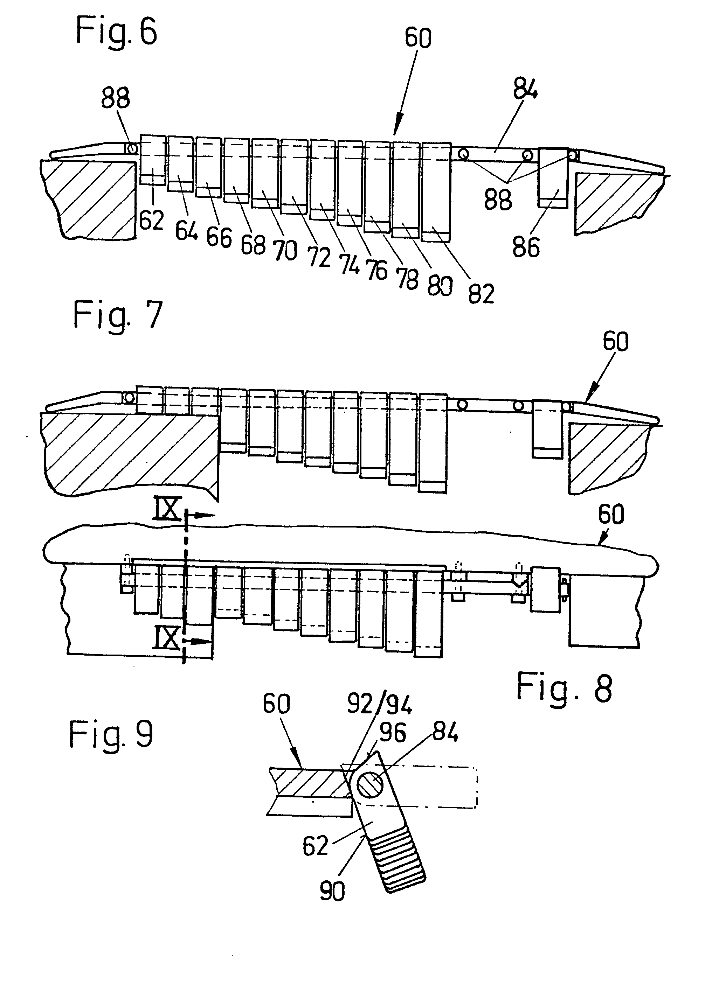

Die Fig.5 zeigt dann weiter die Anordnung und Ausbildung des fest positionierten Anschlages 30, welcher dem verschwenkbaren Anschlag 28 benachbart ist.

Gemäss dem in den Figuren 6 - 9 gezeigten zweiten Ausführungsbeispiel einer Uebergangsbrücke 60 sind die einzelnen Anschläge 62, 64, 66, 68, 70, 72, 74, 76, 78, 80 und 82, welche verschwenkbar an einer an mindestens einer Seite der Uebergangsbrücke 60 angeordneten Achse 84 gelagert sind, von links nach rechts gesehen zunehmend länger als der vorhergehende Anschlag ausgebildet worden. Auf der rechten Seite befindet sich wiederum, wie beim ersten Auführungsbeispiel, an der Unterseite der Uebergangsbrücke ein unverschwenkbar festpositionierter Anschlag 86.

Die Achse 84 ist vornehmlich parallel zur Transportrichtung an mindestens einer Seite der Uebergangsbrücke 60 angeordnet und mit Hilfe von Schrauben 88 fest mit derselben verbunden.

Die Anschläge 62 - 82 sind gemäss der Figur 9 im oberen Schwenkbereich derart ausgebildet, dass sie einmal in der nach unten weisenden Stellung mit der linken Fläche 90 an der rechten, schräg geneigten Fläche 92 der Seitenkante 94 der Uebergangsbrücke 60 und andererseits in der horizontalen Stellung mit der Stirnfläche 96 an der schräg geneigten Fläche 92 der Seitenkante 94 zur Anlage gelangen. Um auch hierbei in jedem Fall das selbsttätige Ausschwenken der Anschläge in eine horizontale Lage zu gewährleisten, werden die Anschläge in der Ausgangsposition in einer zur Vertikalen schräg geneigten Stellung gehalten. Siehe Fig. 9.

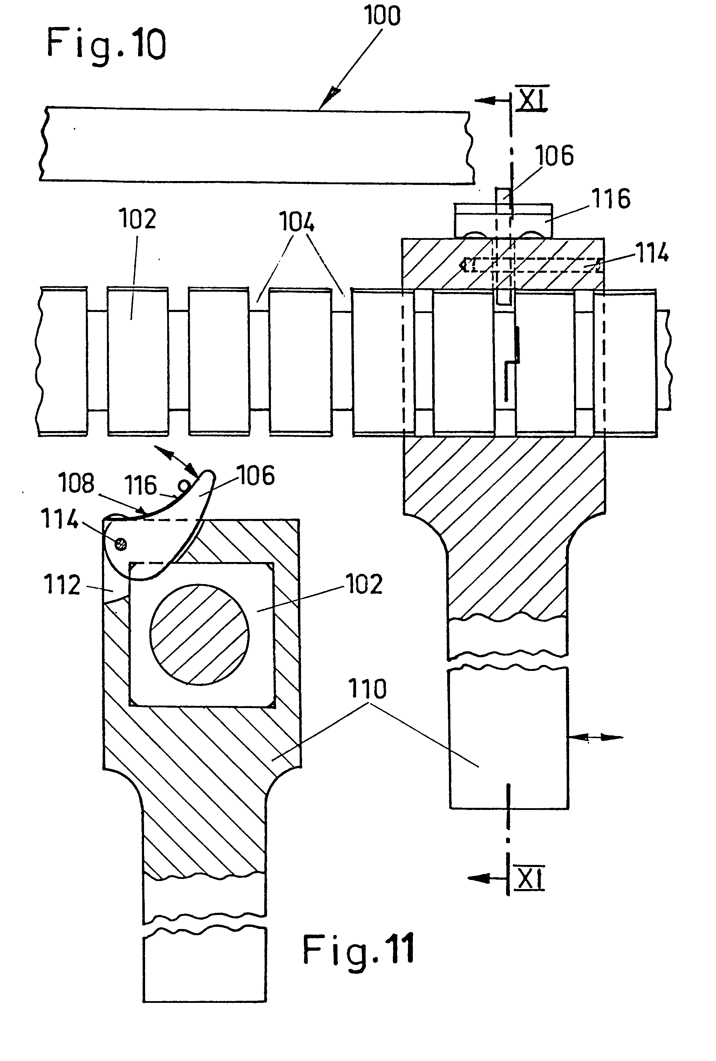

Gemäss dem in den Figuren 10 und 11 gezeigten dritten Ausführungsbeispiel einer Uebergangsbrücke 100 ist an mindestens einer Seite der Uebergangsbrücke ein vornehmlich parallel zur Transportrichtung verlaufender Stab 102 vorgesehen, welcher, wie die Achse 12 beim ersten Ausführungsbeispiel, in einer vertikalen Ebene um etwa 15$^{\circ}$ nach unten hin verschwenkbar ist.

Auf dem aus einem vorzugsweise aus einem Vierkantprofil hergestellten Stab 102 sind in vorbestimmten, gleichmässigen Abständen vollumfängliche Vertiefungen 104 vorgesehen, in welche jeweils eine Sperre 106 einer Feststelleinrichtung 108 eines auf dem Stab 102 hin- und herbeweglichen Anschlages 110 zum Eingriff gelangt. Die Sperre 106 ist in einer Ausnehmung 112, welche an dem im näheren Bereich des Stabes 102 befindlichen Ende des Anschlages 110 angeordnet ist, um eine Achse 114 verschwenkbar gelagert. In der Ausgangsstellung wird die Sperre 106 mit Hilfe einer am oberen Ende des Anschlages befestigten Blattfeder 116 gehalten bzw. in eine der Vertiefungen 104 der Achse 102 gedrückt. Um den Anschlag 110 in die gewünschte Stellung auf der Achse 102 verschieben zu können, ist es lediglich erforderlich, die Sperre 106 gemäss der Fig. 11 entgegen der Kraft der Feder 116 nach links zu drücken. Hierdurch wird der Anschlag entriegelt und kann auf dem Stab 102 verschoben werden.

Die Erfindung ist nicht auf die gezeigten Ausführungsbeispiele beschränkt. Die Ausbildung der Anschläge kann sich beispielsweise von der in den Ausführungsbeispielen gezeigten Ausbildung unterscheiden, ohne dass hierbei vom eigentlichen Erfindungsgedanken abgewichen wird.

In einer nicht dargestellten Weise können die Anschläge auch teleskopartig verlängerbar ausgebildet werden, wenn dieses erwünscht ist.

An Stelle der in dem dritten Ausführungsbeispiel gezeigten Blattfeder 116 zur Betätigung der Sperre 106 kann beispielsweise auch eine nicht dargestellte Torsionsfeder dienen, welche gleichzeitig als Achse zur Aufnahme der Sperre 106 dient. Der Stab 102 kann ausserdem auch um seine eigene Achse verschwenkbar gelagert sein. Der Schwenkbereich des Stabes 102 kann beispielsweise auch durch nicht dargestellte Anschläge am Stab einerseits sowie an den Lagerstellen desselben andererseits begrenzt werden, wenn dieses erwünscht ist.

- 7 -

Die Uebergangsbrücke ist verhältnismässig einfach im Aufbau und bietet in den meisten praktischen Anwendungsfällen Gewähr gegen unbeabsichtigtes Wegrutschen der Brücke von den Ladeflächen bei dem Transport von Gütern.

Patentansprüche

1. Uebergangsbrücke mit in einem Abstand angeordneten Anschlägen zur Sicherung gegen unbeabsichtigtes Wegrutschen von den Auflageflächen der Brücke, welche insbesondere zum Beladen und Entladen von Eisenbahn-Güterwagen auf eine Güterrampe dient, dadurch gekennzeichnet, dass die Uebergangsbrücke (10, 60, 100) eine Stelleinrichtung für die Anschläge aufweist, welche aus einer vornehmlich parallel zur Transportrichtung an der Uebergangsbrücke (10,60) angeordneten, in einer vertikalen Ebene in einem vorbestimmten Winkelbereich nach unten hin verschwenkbaren Achse (12) besteht, an welcher mehrere in einer Reihe angeordnete Anschläge selbsttätig verschwenkbar gelagert sind.

2. Uebergangsbrücke nach dem Anspruch 1, dadurch gekennzeichnet, dass die Achse (12) in einer vertikalen Ebene, z.B. um etwa 15$^{\circ}$, nach unten hin verschwenkbar ist.

3. Uebergangsbrücke nach Ansprüchen 1 und 2, dadurch gekennzeichnet, dass die Anschläge (14, 16, 18, 20, 22, 24, 26 und 28) in einem vorbestimmten Winkelbereich verschwenkbar sind.

4. Uebergangsbrücke nach dem Anspruch 3, dadurch gekennzeichnet, dass die Anschläge in der Ausgangsposition in einer zur Vertikalen schräg geneigten Stellung gehalten sind.

5. Uebergangsbrücke nach Anspruch 1, dadurch gekennzeichnet, dass die Stelleinrichtung aus einem vornehmlich in der Transportrichtung an der Uebergangsbrücke (100) vorgesehenen Stab (102) besteht, an welchem ein Anschlag (110) hin- und herbeweglich und in mehreren Positionen mit Hilfe einer am Anschlag angeordneten Feststelleinrichtung feststellbar ist.

6. Uebergangsbrücke nach Anspruch 5, dadurch gekennzeichnet, dass der Stab (102) die Form eines kantigen Profiles aufweist.

7. Uebergangsbrücke nach den Ansprüchen 5 und 6, dadurch gekennzeichnet, dass auf dem Stab (102) in gleichmässigen Abständen Vertiefungen (104) vorgesehen sind, in welche eine Sperre (106) der am Anschlag (110) angeordneten Feststelleinrichtung einrastbar ist.

8. Uebergangsbrücke nach dem Anspruch 5, dadurch gekennzeichnet, dass der Anschlag (110) teleskopartig ausgebildet ist.

9. Uebergangsbrücke nach den Ansprüchen 5, 6 und 7, dadurch gekennzeichnet, dass der Stab (102) um seine eigene Achse verschwenkbar ist.

10. Uebergangsbrücke nach dem Anspruch 9, dadurch gekennzeichnet, dass am Stab (102) und an den Lagerstellen desselben zur Begrenzung des Schwenkbereiches des Stabes Anschläge angeordnet sind.

Fig. 1

Fig. 2

Fig. 3

Fig. 4

Fig. 5

Fig. 6

Fig. 7

Fig. 8

Fig. 9

0027781

Fig.10

100

106

116

102

104

114

108    116    106

114

112

102

110

Fig.11

XI

XI

**Europäisches Patentamt**

# EUROPÄISCHER RECHERCHENBERICHT

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| X | DE - A - 2 339 432 (STARK)<br><br>* Seite 5, Zeilen 4-29; Seite 6, Zeilen 19-30; Seite 7, Zeilen 1-14; Figuren 3,4,7 *<br><br>-- | 1-3 | B 65 G 69/28 |
| | US - A - 3 192 546 (NOLAND)<br><br>* Seite 2, Zeilen 17-64; Figuren 1-3 *<br><br>-- | 3,4 | |
| | US - A - 2 452 222 (BRYSON)<br><br>* Seite 2, Zeilen 21-49; Figuren 1-3 *<br><br>-- | 5,7 | **RECHERCHIERTE SACHGEBIETE (Int. Cl.³)**<br><br>B 65 G |
| D,A | CH - A - 355 085 (ALUMINIUM-INDUS-TRIE)<br><br>* Insgesamt *<br><br>-- | 1 | |
| D,A | DE - B - 1 289 787 (MANNS)<br><br>* Insgesamt *<br><br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-01-1981 | OST IJN |

EPA form 1503.1  06.78